# EUROPÄISCHE PATENTANMELDUNG

(11) **EP 0 713 939 A2**
(43) Veröffentlichungstag der Anmeldung: **29.05.1996**
(21) Anmeldenummer: 95117837.5
(22) Anmeldetag: 13.11.1995
(51) Int. Cl.: D06M 15/263, D06M 15/277, D06M 15/285, D06M 15/31, D06M 15/267, D21H 17/37, C08L 33/16, C08K 3/18

(54) **Öl-, wasser- und schmutzabweisend ausgerüstete Substrate und fluorhaltige Mittel hierzu**

(30) Priorität: 25.11.1994 DE 4441982
(71) Anmelder: BAYER AG, 51368 Leverkusen (DE)
(72) Erfinder: Michels, Gisbert, Dr., D-51061 Köln (DE); Ehlert, Hans-Albert, D-51373 Leverkusen (DE); Zweering, Uwe, Dr., D-40589 Düsseldorf (DE)

(57) **Zusammenfassung**

Öl-, wasser- und schmutzabweisend ausgerüstete Substrate aus der Gruppe von nativen und synthetischen Textilien und ihren Gemischen, Leder, mineralischen Stoffen, thermoplastischen und duroplastischen Polymeren und Papier enthalten fluorhaltige Mittel, die zwei Komponenten A und B enthalten.

Die Komponente A ist ein fluorhaltiges Acrylcopolymerisat mit folgenden Comonomeren:
a) Perfluoralkylgruppen enthaltende (Meth)acrylate

   CₙF₂ₙ₊₁-X-O-CO-CR¹=CH₂ (I),
b) Monomere aus der Gruppe von Styrol, Acrylnitril, Vinylacetat, Vinylpropionat und Monomeren

   CH₂=CR⁴-CO-OR⁵ (II),
c) Monomere 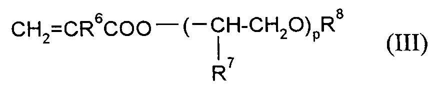 und
d) Monomere

   CH₂=CR¹¹COO-CH₂CH₂N(R⁹,R¹⁰) (IVa)

   oder in quaternisierter Form

   [CH₂=CR¹¹-COO-CH₂CH₂N(R⁹R¹⁰R¹²)]^{⊕}Y^{⊖} (IVb)

   oder in N-oxidierter Form 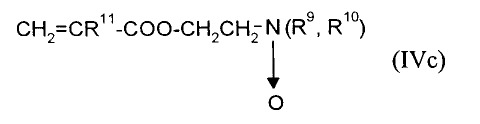 oder der Formel

   CH₂=CR¹³-COO^{⊖}Z^{⊕} (V).

Die Komponente B ist ein fluorfreies Poly(meth)acrylat aus Comonomeren

CH₂=CHR¹⁴-COO-R¹⁵ (VI).

0 bis 20 Gew.-% des Comonomer (VI) können durch Comonomere aus der Gruppe von Vinylacetat, Styrol, Acrylnitril, Hydroxyethyl-(meth)acrylat, Hydroxypropyl-(meth)acrylat, Glycidyl-(meth)acrylat, (Meth)acrylamid, N-Methylol-(meth)acrylamid und N-Methoxymethylol-(meth)acrylamid ersetzt sein.

Das Gewichtsverhältnis von A zu B beträgt 1:25 bis 10:1.

Substituenten und Indices sind in der Beschreibung genannt.

## Beschreibung

Die vorliegende Erfindung betrifft öl-, wasser- und schmutzabweisend ausgerüstete Substrate, insbesondere Heimtextilien, und fluorhaltige Mittel hierzu.

Viele Substrate, insbesondere Heimtextilien, z.B. Teppiche, erhalten öl-, wasser- und schmutzabweisende Eigenschaften, indem beispielsweise der Flor eines Teppichs mit Fluorcarbonverbindungen behandelt wird.

Besonders gute Effekte sind nach der Literatur durch Mischungen von Fluorcarbonverbindungen mit verschiedenen fluorfreien Stoffen zu erhalten. Aus der DE-OS 3 307 420 ist eine Mischung aus Fluorcarbonverbindungen und Organosilsesquioxanen bekannt, die für die Teppichausrüstung eingesetzt werden. Aus der DE-OS 2 149 292 und DE-PS 3 002 369 ist eine Mischung aus wasserunlöslichen Fluorcarbonverbindungen, die z.B. als Ester oder Urethan vorliegen können, und wasserunlöslichen Polymerisaten, die frei sind von Fluor in Nicht-Vinyl-Stellung, mit Hauptübergangstemperaturen von mehr als 45°C bzw. 25°C bekannt. Hauptübergangstemperaturen sind Schmelzpunkte oder Glasübergangstemperaturen. Bevorzugte wasserunlösliche Polymerisate mit einer Glasübergangstemperatur von größer als 45°C sind nach DE-OS 2 149 292 und DE-PS 3 002 369, z.B. Polymethylmethacrylat oder Poly(methylmethacrylat-co-ethylmethacrylat). Hierbei wird betont, daß die Mittel zur Verhinderung der Schmutzeinbettung weder klebrig noch gummiartig sein dürfen. Gemeinsame Nachteile der genannten Ausrüstungsmittel ist, daß zur Erzielung guter öl-, wasser- und schmutzabweisender Eigenschaften große Mengen der fluorcarbonhaltigen Mittel, bezogen auf das Teppichfasergewicht, eingesetzt werden müssen. Bei den oben genannten Ausrüstungsmitteln ist ebenfalls nachteilig, daß die wasserabweisenden Eigenschaften der ausgerüsteten textilen Bodenbeläge für erhöhte Anforderungen (z.B. Wasser/Isopropanol-Abweisungen größer 50/50: siehe Ausführungsbeispiele) auch bei Einsatz großer Mengen nicht ausreichend sind. Ein weiterer Nachteil ist, daß die textilen Bodenbeläge nach der Behandlung mit den oben genannten fluorhaltigen Ausrüstungsmitteln zur Erlangung der gewünschten Effekte auf mindestens 70°C, meist jedoch auf 100 bis 130°C, erhitzt werden müssen. Wärmebehandlungen bei erhöhter Temperatur sind jedoch kostspielig und deshalb unerwünscht und zum Teil schädlich für bestimmte Teppichkonstruktionen. Die Ausrüstungsmittel nach DE-OS 2 149 292 und DE-PS 3 002 369 haben weiterhin den Nachteil, daß nur bestimmte Ausrüstungsmethoden befriedigende Ergebnisse liefern. Welche Ausrüstungsmethode zur Anwendung kommt, ist jedoch von der vorhandenden Ausrüstungsanlage abhängig und somit nicht vorher zu bestimmen.

Aus EP 552 630 und EP 554 667 sind ferner Ausrüstungsmittel für verschiedene Substrate bekannt, die nur auf fluorhaltigen Copolymeren beruhen und daher höhere Aufträge der teuren Fluorkomponente auf den Substraten erfordern.

Der Erfindung liegt daher die Aufgabe zugrunde, öl-, wasser- und schmutzabweisend ausgerüstete Substrate sowie Mittel für deren öl-, wasser- und schmutzabweisende Ausrüstung, insbesondere für die Ausrüstung von Heimtextilien, bereitzustellen, die mit deutlich geringeren Mengen der teuren Fluorcarbonverbindungen, bezogen auf das Substratgewicht, gute Effekte erzielen. Weiterhin sollen die erfindungsgemäßen Mittel den Substraten, insbesondere den Heimtextilien, wasserabweisende Wirkungen verleihen, die erhöhten Anforderungen gerecht werden. Eine weitere Aufgabe besteht darin, Ausrüstungsmittel bereitzustellen, bei denen die Wärmebehandlung bei möglichst niedriger Temperatur durchführbar ist oder bevorzugt keine Wärmebehandlung notwendig ist. Wünschenswert ist auch, daß die Ausrüstungsmittel nach allen gängigen und bekannten Ausrüstungsmethoden gute Ergebnisse liefern.

Es wurde nun überraschend gefunden, daß wäßrige Dispersionen, deren von Wasser verschiedene Inhaltsstoffe Mischungen aus fluorhaltigen Acrylpolymerisaten (Komponente A) und fluorfreien Poly(meth)acrylaten (Komponente B) darstellen, geeignete Mittel für die öl-, wasser- und schmutzabweisende Ausrüstung von Substraten, insbesondere Heimtextilien, sind und die oben genannten Probleme lösen. Es wurde weiterhin gefunden, daß alle gängigen Ausrüstungsmethoden geeignet sind, Substraten, insbesondere Heimtextilien, gute öl-, wasser-und schmutzabweisende Eigenschaften zu verleihen, wenn dabei die Substrate mit den erfindungsmäßen Mitteln behandelt werden. Dies ist überraschend, da die für die vorliegende Erfindung benutzten Komponenten A ein Glasübergangstemperatur unterhalb von 25°C haben und bei Raumtemperatur gummiartig und zum Teil klebrig vorliegen.

Die Erfindung betrifft Substrate aus der Gruppe von nativen und synthetischen Textilien und ihren Gemischen, Leder, mineralischen Stoffen, thermoplastischen und duroplastischen Polymeren und Papier, die mit fluorhaltigen Mitteln der weiter unten genannten Art in einer Menge von 10 bis 10.000 ppm, bevorzugt 50 bis 5.000 ppm, besonders bevorzugt 100 bis 2.000 ppm, gerechnet als Fluor und bezogen auf das Gesamtgewicht der Substrate, öl-, wasser- und schmutzabweisend ausgerüstet sind.

Die Erfindung betrifft weiterhin Mittel zur öl-, wasser- und schmutzabweisenden Ausrüstung von Substraten, enthaltend zwei Komponenten A und B, und wäßrige Dispersionen daraus, deren von Wasser verschiedene Inhaltsstoffe 5-50% des Gesamtgewichtes der Dispersionen darstellen und in denen die Komponente A ein fluorhaltiges Acrylpolymerisat darstellt, das, bezogen auf das Gesamtgewicht von A, folgende Gewichtsanteile an Comonomeren enthält:
a) 40 bis 85 Gew.-% Perfluoralkylgruppen enthaltende (Meth)acrylate der Formel

   CₙF₂ₙ₊₁-X-O-CO-CR¹=CH₂ (I),
b) 1 bis 45 Gew.-% eines oder mehrerer Monomerer aus der Gruppe von Styrol, Acrylnitril, Vinylacetat, Vinylpropionat und Monomeren der Formel

   CH₂=CR⁴-CO-OR⁵ (II),
c) 4 bis 30 Gew.-% Monomere der Formel 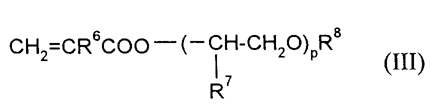 und
d) 1 bis 15 Gew.-% ionische oder ionisierbare Monomere, die entweder eine Amin- oder eine Carboxylfunktion aufweisen, der Formel

   CH₂=CR¹¹COOCH₂CH₂N(R⁹,R¹⁰) (IVa),

   oder sich in quaternisierter Form der Formel

   [CH₂=CR¹¹-COO-CH₂CH₂N(R⁹R¹⁰R¹²)]^{⊕}Y^{⊖} (IVb)

   oder sich in N-oxidierter Form der Formel 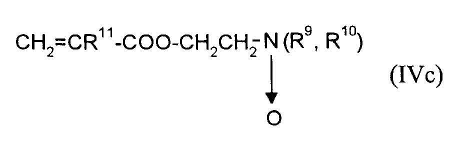 befinden oder solche der Formel

   CH₂=CR¹³-COO^{⊖}Z^{**⊕**} (V)

   sind, wobei in den Formeln
   - n: eine Zahl von 4 bis 20, bevorzugt 6 bis 16, oder ein Gemisch mehrerer dieser Zahlen darstellt,
   - X: für -(-CH₂-)ₘ-, -SO₂-NR²-CH₂-CHR³- oder -O-(-CH₂-)ₘ- steht, wobei m eine Zahl von 1 bis 4, bevorzugt 2, bedeutet,
   - R¹, R³, R⁴, R⁶, R⁷, R¹¹ und R¹³: unabhängig voneinander für Wasserstoff oder Methyl stehen,
   - R², R⁹, R¹⁰ und R¹²: unabhängig voneinander C₁-C₄-Alkyl bedeuten,
   - R⁵: für C₁-C₂₂-Alkyl steht,
   - R⁸: Wasserstoff oder C₁-C₈-Alkyl bedeutet,
   - p: für eine Zahl von 1 bis 50 oder für ein Gemisch mehrerer Zahlen steht,
   - Y^{⊖}: für ein Äquivalent eines ein-bis dreiwertigen Anions steht und
   - Z^{⊕}: das Proton H^{⊕} oder ein Äquivalent eines einwertigen Kations bedeutet;
und die Komponente B ein fluorfreies Poly(meth)acrylat aus einem oder mehreren Comonomeren der Formel

CH₂=CHR¹⁴-COO-R¹⁵ (VI)

oder Polyacrylnitril mit 0 bis 20 Gew.-% Comonomer (VI) darstellt, in der
- R¹⁴: Wasserstoff oder Methyl bedeutet und
- R¹⁵: für C₁-C₂₂-Alkyl steht,
wobei 0 bis 20 Gew.-% des Comonomer der Formel (VI) durch ein oder mehrere Comonomere aus der Gruppe von Vinylacetat, Styrol, Acrylnitril, Hydroxyethyl(meth)acrylat, Hydroxypropyl-(meth)acrylat, Glycidyl-(meth)acrylat, (Meth)acrylamid, N-Methylol-(meth)acrylamid und N-Methoxymethylol-(meth)acrylamid ersetzt sein können und wobei das Gewichtsverhältnis von Komponente A zu Komponente B im Bereich von 1:25 bis 10:1, bevorzugt von 1:10 bis 5:1 liegt.

In bevorzugter Weise nimmt bei Monomeren der Formel (I) n Werte von 6 bis 16 an und in weiterhin bevorzugter Weise m den Wert 2. In bevorzugter Weise bedeutet bei Monomeren der Formel (I) R¹ Wasserstoff. Der Perfluoralkylrest (-CₙF₂ₙ₊₁) kann unverzweigt oder verzweigt sein.

In bevorzugter Weise bedeutet bei Monomeren der Formel (II) R⁵ Methyl, Ethyl, Propyl, Butyl, Hexyl oder Octyl, Stearyl oder Behenyl.

In bevorzugter Weise bedeutet bei Monomeren der Formel (III) R⁷ Wasserstoff und der Index p eine Zahl von 3 bis 25.

In bevorzugter Weise bedeuten bei Monomeren der Formel (IVa, b, c) R⁹ und R¹⁰ Methyl. Bevorzugte Anionen Y^{⊖} sind Chlorid, Acetat, 1/2 Sulfat, C₁-C₁₂-Aryl- oder Alkylsulfonat oder 1/3 Phosphat. Besonders bevorzugt sind Chlorid, Acetat und 1/3 Phosphat.

In den fluorhaltigen Acrylpolymerisaten können auch Gemische mehrerer unter die Formeln (I), (II), (III) bzw. (IVa, b, c) oder (V) fallender Stoffe eingesetzt werden.

Ein bevorzugtes fluorhaltiges Acrylpolymerisat (Komponente A) enthält neben den Monomeren a), b) und c), in den oben angebenen Mengen als Monomer d) 1-15 Gew.-% solche der Formel (V).

Bevorzugte Monomere (I), (II) und (III) besitzen die weiter vorne angegebenen Bedeutungen. Bei dem Monomer (V) bedeutet Z^{⊕} bevorzugt Na^{⊕}, K^{⊕}, NH₄^{⊕}, H₂N^{⊕} (CH₂CH₂OH)₂, H₃N^{⊕} CH₂CHOH oder mehrere von ihnen, die als Summe ein Äquivalent ergeben. Die Komponente A enthält entweder Comonomere der Formel (IVa, b, c) oder (V). In bevorzugter Weise enthält die Komponente A des erfindungsgemäßen Mittels Comonomere der Formel (IVa, b, c).

Ein Herstellverfahren für die Komponente A, die durch Einbau des Monomers (IV a,b,c) kationisch stabilisiert ist, ist in US 5 247 008 beschrieben und besteht in der gemeinsamen radikalisch initiierten Polymerisation, etwa in Lösung oder Suspension, und anschließender Neutralisation mit Säure. Das Herstellverfahren für die Komponente A, die durch Einbau des Monomers (V) anionisch stabilisiert ist, wird in prinzipiell gleicher Weise durchgeführt Bei Verwendung des Monomers (V) und Vorliegen des Protons H^{⊕} als Z^{⊕} wird jedoch mit einer Base, bevorzugt mit Natronlauge, Kalilauge, Ammoniakwasser, Diethanolamin oder Monoethanolamin, neutralisiert.

Die Poly(meth)acrylate (Komponente B) bestehen bevorzugt aus folgenden Comonomeren der Formel (VII), wobei auch Gemische mehrerer unter die Formel (VII) fallender Stoffe eingesetzt werden können:

CH₂=CR¹⁴COOR¹⁶ (VII),

in der
- R¹⁴: Wasserstoff oder Methyl und
- R¹⁶: C₁-C₄-Alkyl bedeuten.

In das Poly(meth)acrylat der Komponente B können bis zu 20 Gew.-% zusätzliche Monomere, wie z.B. Vinylacetat, Styrol, Acrylnitril, Hydroxyethyl-(meth)acrylat, Hydroxypropyl-(meth)acrylat, Glycidyl-(meth)acrylat, (Meth)acrylamid, N-Methylol-(meth)acrylamid, N-Methoxymethylol-(meth)acrylamid, eingebaut sein. Für die Komponente B eignet sich ein Herstellverfahren, wie es in US 4 043 964 und DE 3 002 369 beschrieben ist.

An Stelle des Poly(meth)acrylats (VI) als Komponente B kann Polyacrylnitril treten, das bis zu 20 Gew.-% an Comonomer (VI) und weiterer im vorstehenden Abschnitt aufgeführten Monomeren enthalten kann. Im Falle der Komponente B mit R¹⁴ und R¹⁵ = Methyl liegt die Hauptübergangstemperatur (Glastemperatur) bei 105°C. Überraschenderweise kann auch bei Einsatz dieser Komponente auf eine Wärmebehandlung verzichtet werden und stattdessen nach der Ausrüstung bei Raumtemperatur (25°C) getrocknet werden.

Das Gewichtsverhältnis der Komponente A zur Komponente B im erfindungsgemäßen Ausrüstungsmittel liegt im Bereich von 1:25 bis 10:1, bevorzugt im Bereich von 1:10 bis 5:1.

Die Erfindung ist demnach vor allem gekennzeichnet durch die fluorhaltigen Mittel mit den Komponenten A und B, mit denen Substrate ausgerüstet werden. Zur Ausrüstung kann man aber auch neben den erfindungsgemäßen Mitteln andere übliche Textilhilfsmittel, deren Zusatz schon bei der Herstellung der Ausrüstungsflotte aber selbstverständlich auch erst nachträglich erfolgen kann, mitverwenden. Als solche Zusätze sind übliche Knitterfrei- und Weichgriffmittel, Flammfestmittel, Oleophobierungsmittel, Hydrophobiermittel, Appreturmittel, Extender für Textilhilfsmittel und andere zu nennen. Selbstverständlich ist es auch angebracht, soweit erforderlich, bekannte Härtungsmittel mitzuverwenden.

Als Beispiele für solche zusätzlichen Mittel seien genannt: Melaminkondensationsprodukte, wie sie z.B. in DE-A 3 800 845 bzw. in US 2 398 569 beschrieben sind; wäßrige kolloidale Suspensionen von Organosiloxanen, die beispielsweise aus DE-A 3 307 420 bekannt sind.

So können Organosilsesquioxane, wie sie z.B. in der DE-AS 1 594 985 oder in der DE-OS 3 004 824 beschrieben sind, eingesetzt werden. Sie bestehen z.B. aus Einheiten der Formel RSiO_{3/2} (R = gegebenenfalls substituierter Alkyl- bzw. Arylrest mit bis zu 7 Kohlenstoffatomen) und/oder aus Cokondensaten von Hydrolysaten von Tetraalkoxysilanen mit Organotrialkoxysilanen mit RSiO_{3/2}- bzw. SiO₂-Einheiten. Diese werden hergestellt, indem man z.B. Silane der allgemeinen Formel R-Si(OR')₃ alleine oder zusammen mit Silanen Si(OR')₄ worin R substituierter oder unsubstituierter Kohlenwasserstoffrest mit 1 bis 7 Kohlenstoffatomen, dessen Substituenten Halogenatome, Amino-, Mercapto- und Epoxygruppen sein können und bis zu 95 % der Reste R Methyl sind und R¹ einen Alkylrest mit 1 bis 4 Kohlenstoffatomen bedeutet zu einem Gemisch aus Wasser, einer Puffersubstanz, einem oberflächenaktiven Mittel und gegebenenfalls einem organischen Lösungsmittel unter Bewegung und unter sauren oder basischen Bedingungen zugegeben werden.

Die erfindungsgemäßen Mittel stellen bei der Behandlung von Substraten, insbesondere Heimtextilien, eine Verbesserung gegenüber den Mitteln, die in DE 3 307 420, DE 2 149 292 und DE 3 002 369 beschrieben werden, dar. Gegenüber den aus EP 552 630 und EP 554 667 bekannten Mitteln stellen die erfindungsgemäßen Mittel durch die Mitverwendung der Komponente B eine beträchtliche Verbilligung dar.

Alle Verfahren, die geeignet sind, Substraten, insbesondere Heimtextilien, gute öl-, wasser- und schmutzabweisende Eigenschaften zu verleihen, sind durch Verwendung der erfindungsgemäßen Mittel gekennzeichnet. Die den erfindungsgemäß ausgerüsteten Substraten zugrundeliegenden Basissubstrate sind beispielsweise: Leinen, Baumwolle, Wolle, Seide, Jute, Polyamid, Polyester, Polyacrylnitril und Gemische daraus, Leder, Steinplatten, Fliesen, Kacheln, Dachziegel, Glas, Schliffe aus Silizium, Folien und Filme sowie kompakte Werkstücke aus Polyolefinen, Polyestern, Polyamiden, Polycarbonaten, Polyurethanen, Polyacetalen, Polyethern, Polysulfiden, Polysulfonen, Polyimiden und anderen Thermoplasten, sowie aus Phenol-Formaldehyd-Harzen, Harnstoff-Formaldehyd-Harzen, Melamin-Formaldehyd-Harzen und anderen Duroplasten, Papier und papierähnliche Stoffe, wie Pappe. Bevorzugte Basissubstrate sind Heimtextilien auf der Basis nativer und synthetischer Textilien und ihrer Gemische, die etwa als Teppiche, Vorhänge, Dekorationsstoffe oder Bezüge für Polstermöbel eingesetzt werden.

Verfahren zur Ausrüstung solcher Basissubstrate und damit zur Applikation der erfindungsgemäßen fluorhaltigen Mittel sind dem Fachmann bekannt und stellen beispielsweise das Tauchen oder Besprühen der Basissubstrate dar; weiterhin können die erfindungsgemäßen Mittel bei der Herstellung der Basissubstrate, etwa der Papiermasse (Pulpe) eingesetzt werden.

Textilien als Basissubstrate, bevorzugt Heimtextilien, können beispielsweise im Foulard-, Sprüh- oder Schaumverfahren behandelt werden.

Der Foulard besteht aus einen Flottentrog (Chassis) und zumindest einem Gummiwalzenpaar. Die zu behandelnden Textilien werden im Chassis mit der Ausrüstungsflotte getränkt und zwischen den Walzen abgequetscht; die überflüssige Flotte läuft in das Chassis zurück. Sehr wichtig ist, daß beim Abquetschen eine gleichmäßige Flottenaufnahme über die gesamte Warenbreite erreicht wird. Die Flottenaufnahme beim Foulardieren wird in Prozent vom Warengewicht angegeben und kann bei normalen Textilkonstruktionen, je nach Warenqualität und angewendetem Foulard-Druck, zwischen 30 und 300 % liegen.

Beim Sprühverfahren wird das Textil mit der Ausrüstungsflotte besprüht. Die Ausrüstungsflotte wird durch Düsen fein verteilt und gleichmäßig aufgebracht. Ein Quadratmeter Textilgut erhält eine zuvor genau definierte Auftragsmenge der Ausrüstungsflotte.

Beim Schaumverfahren wird die Ausrüstungsflotte kontinuierlich in einem handelsüblichen Mischer mechanisch durch Zugabe eines Verschäumungsmittels verschäumt. Der Schaum wird im Mischkopf durch Mischen der Flotte mit Luft hergestellt. Der austretende Schaum wird über eine Schaumleitung zu einen Austrittsschlitz gefördert. Die Ware wird gegen den Schlitz gedrückt und über ein getrenntes Aggregat, z.B. ein Spannrahmen, abgezogen. In den nachfolgenden Beispielen wurde als Verschäumungsmittel ein langkettiges Aminoxid (Baygard® Foamer der Bayer AG) in einer Konzentration von 3 g/l Ausrüstungsflotte eingesetzt und der Verschäumungsgrad auf 1:33 eingestellt. Die Versuche wurden auf dem Küsters Foam Applikator (=KFA-Anlage), Fa. Küsters, Krefeld, durchgeführt.

Die Textilien, bevorzugt Heimtextilien, werden nach der Ausrüstung getrocknet, wobei zum Erreichen der gewünschten Ausrüstungseffekte gemäß bekannter Arbeitsweise Temperaturen von 120 bis 150°C angewandt werden können. Mit den neuen erfindungsgemäßen Mitteln können jedoch gute öl-, wasser- und schmutzabweisende Ausrüstungen auch bei deutlich niedrigeren Trocknungstemperaturen, beispielsweise bei 25°C erhalten werden.

Aus den so vorbehandelten Materialien wurden Muster zur Prüfung folgender Effekte entnommen:
**Ölabweisung (gemäß AATCC 118-1972)**: Das Prüfmuster wird auf eine horizontale, glatte Oberfläche gelegt, und mit Hilfe einer Tropfpipette wird ein kleiner Tropfen (Tropfendurchmesser etwa 5 mm) der Testflüssigkeiten auf das Prüfmuster aufgetragen und gemäß Vorschrift nach jeweils 30 Sekunden bewertet. Die AATCC-Ölabweisungsstufe eines Testgewebes ist die Höchstzahl derjenigen Testflüssigkeit, die innerhalb einer Zeitspanne von 30 Sekunden das Testmaterial nicht benetzt oder darin eindringt. Die Testflüssigkeiten bzw. -mischungen für die Testmethode sind: Nr. 1: Nujol oder Paraffinöl DAB 8; Nr. 2: 65 Vol.-% Nujol und 35 Vol.-% n-Hexadecan; Nr. 3: n-Hexadecan; Nr. 4: n-Tetradecan; Nr. 5: n-Dodecan; Nr. 6: n-Decan; Nr. 7: n-Octan; Nr. 8: n-Heptan.
**Abweisung eines Wasser/Alkohol-Gemisches (Hydrophobie):** Es werden Tropfen von Wasser/Isopropanol-Mischungen (Verhältnis 90/10 bis 10/90) auf das Prüfmuster aufgetragen. Das Testergebnis entspricht der Mischung mit höchstem Isopropanolanteil, die mindestens 20 Sekunden lang unverändert auf dem Prüfmuster verbleibt (der Wert 80/20 ist beispielsweise besser als 20/80).
**Schmutzabweisung (Laboranschmutzttest in Anlehnung an DIN 54 324, Stuhlrollenversuch):** Aus der behandelten Teppichware wurden gemäß den DIN-Vorschriften Muster entnommen und mit 10 g eines synthetischen Schmutzes angeschmutzt. Die Belastung der Proben erfolgt nach dem Stuhlrollenversuch, der in der DIN 54 324 ausführlich beschrieben ist, bei einer Rollenbelastung von insgesamt 60 kg und einer Änderung der Rollendruckrichtung nach jeweils 50 Umdrehungen. Die Prüflinge werden mit einem Staubsauger (1 000 Watt) einmal mit und einmal gegen den Strich abgesaugt und visuell bewertet. Es werden Testnoten angegeben, wobei höheren Zahlen eine verbesserte Schmutzabweisung anzeigen. Der synthetische Schmutz wird wie folgt hergestellt:
1 932 g Schamotte
40 g Eisenoxid schwarz
20 g Eisenoxid gelb
8 g Ruß
1 000 g Wasser
Nach einer 40-stündigen Behandlung in einer Porzellan-Kugelmühle wird die obige Mischung getrocknet, grob zerkleinert, in einer Pulvermühle gemahlen und abschließend mittels Siebmaschine durch ein Sieb mit einer Maschenweite von 10 µm gesiebt.

### Beispiele

Nicht erfindungsgemäße Mittel, die den Stand der Technik repräsentieren (vgl. weiter vorn), sind folgende:
Scotchgard® FC 396 (Fa. 3M Comp.) gemäß DE-OS 2 149 292
Baygard® SF-A (Fa. Bayer AG) gemäß DE-OS 3 307 420
Die erfindungsgemäßen Mittel sind wäßrige Dispersionen, deren Inhaltsstoffe aus einer Mischung aus einem oder mehreren fluorhaltigen Acrylatpolymerisaten (Komponente A) und einem oder mehreren Poly(meth)acrylaten (Komponente B) bestehen.

Herstellung der fluorhaltigen Acrylatpolymerisate (Komponente A):

### Beispiel A1

Man bereitete in einem Reaktor mit Thermometer, Rührer und Rückflußkühler eine Lösung aus
62,0 Gew.-Tle. CH₂=CHCOOCH₂CH₂CₙF₂ₙ₊₁ (Mischung mit n = 6, 8, 10, 12, 14, 16)
15,0 Gew.-Tle. n-Butylacrylat,
20,0 Gew.-Tle. 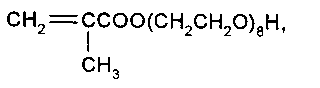
3,0 Gew.-Tle Dimethylaminoethylmethylacrylat in
285,0 Gew-Tle. Aceton.

Die Lösung wurde zunächst bei Raumtemperatur in einer Stickstoffatmosphäre gerührt, dann mit 2,25 Gew.-Tle. tert.-Butylperpivalat (75 %ig) versetzt und 8 h bei 73°C unter autogenem Druck gehalten. Nach dieser Zeit war die Polymerisation beendet. Zur Polymerisatlösung, die auf 50°C abgekühlt wurde, wurden in 15 min eine Lösung von
3,9 Gew.-Tle. Essigsäure in
296,0 Gew.-Tle. entionisiertem Wasser
bei 50°C zugegeben. Es wurde 15 min gerührt, und anschließend wurde das Aceton destillativ bei 60°C/200-300 mbar entfernt. Man erhielt eine stabile Polymerdispersion mit einem Feststoffgehalt von 25 Gew.-%. Die Glastemperatur des Polymeren liegt bei -60°C (DSC).

### Beispiel A2

In gleicher Weise wie bei Beispiel A1 wurde ein Polymerisat, basierend auf folgender Monomermischung, hergestellt; die Glastemperatur des Polymerisates liegt bei -44°C (DSC).
70,0 Gew.-Tle. CH₂=C(CH₃)COOCH₂CH₂CₙF₂ₙ₊₁ (Mischung mit n = 6, 8, 10, 12, 14, 16)
12,0 Gew.-Tle. Methylmethacrylat,
15,0 Gew.-Tle. CH₂=CHCOO(CH₂CH₂O)₈H,
3,0 Gew.-Tle. Dimethylaminoethylmethylacrylat.

Herstellung eines Polymethacrylates (Komponente B):

### Beispiel B

Es wurde eine wäßrige Polymethylmethacrylat-Dispersion nach den Angaben in DE 2 149 292, Beispiel 8, hergestellt, jedoch mit dem Unterschied, daß der Feststoffgehalt auf 30 Gew.-% eingestellt wurde.

Herstellung der erfindungsgemäßen Mittel:

### Beispiele 1 bis 3

Die erfindungsgemäßen Mittel wurden durch Mischen der Komponenten A und B als wäßrige Dispersionen erhalten. Die Mischungsverhältnisse sind in der nachfolgenden Tabelle angegeben:

| Beispiel | Komponente A2 | Komponente B (Gew.-Teile) |
|---|---|---|
| 1 | 75 | 25 |
| 2 | 60 | 40 |
| 3 | 40 | 60 |

Verwendung der erfindungsgemäßen Mittel:

### Beispiel I

Das auszurüstende Basissubstrat war ein Teppich (Polyamid-Velours) mit einem Polgewicht von 600 g/m². Die Auftragung der erfindungsgemäßen Mittel erfolgte nach dem Foulardverfahren. Die Herstellung der Ausrüstungsflotte erfolgte durch Verdünnen der Produkte nach Beispiel 1 bis 3 mit Wasser in der Art, daß bei einer Flottenaufnahme von 100 % ein Fluorauftrag von 300 bzw. 600 ppm auf dem Teppich, bezogen auf das Gesamtgewicht des Teppichs, erzielt wurde.

### Beispiel II

Das auszurüstende Basissubstrat war ein Teppich mit einem Polgewicht von 600 g/m². Die Auftragung der erfindungsgemäßen Mittel erfolgte nach dem Sprühverfahren. Die Herstellung der Ausrüstungsmittel erfolgte durch Verdünnen der Produkte nach Beispiel 1 bis 3 mit Wasser in der Art, daß beim Versprühen von 200 ml Flotte pro m² Teppich ein Fluorauftrag von 300 ppm bzw. 600 ppm auf dem Teppich erzielt wurde.

### Beispiel III

Das auszurüstende Basissubstrat war ein Teppich mit einem Polgewicht von 600 g/m². Die Auftragung der erfindungsgemäßen Mittel erfolgte nach dem Schaumverfahren. Die Herstellung der Ausrüstungsflotte erfolgte durch Verdünnen der Produkte nach Beispiel 1 bis 3 mit Wasser in der Art, daß bei einem Naßauftrag von 30 % ein Fluorauftrag von 300 bzw. 600 ppm auf dem Teppich erzielt wurde. Als Verschäumungsmittel wurde Baygard® Foamer in einer Konzentration von 3 g/l Ausrüstungsflotte zugesetzt; der Verschäumungsgrad liegt bei 1:33.

Nach der Ausrüstung nach Beispielen I bis III wurde der Teppich bei 120°C getrocknet und seine öl-, wasser- und schmutzabweisenden Eigenschaften geprüft.

Als Vergleich wurden die Produkte Scotchgard® FC 396 und Baygard® SF-A statt der Produke nach Beispiel 1 bis 3 in den Beispielen I bis III eingesetzt. Die Ergebnisse sind der nachfolgenden Tabelle 1 zu entnehmen.

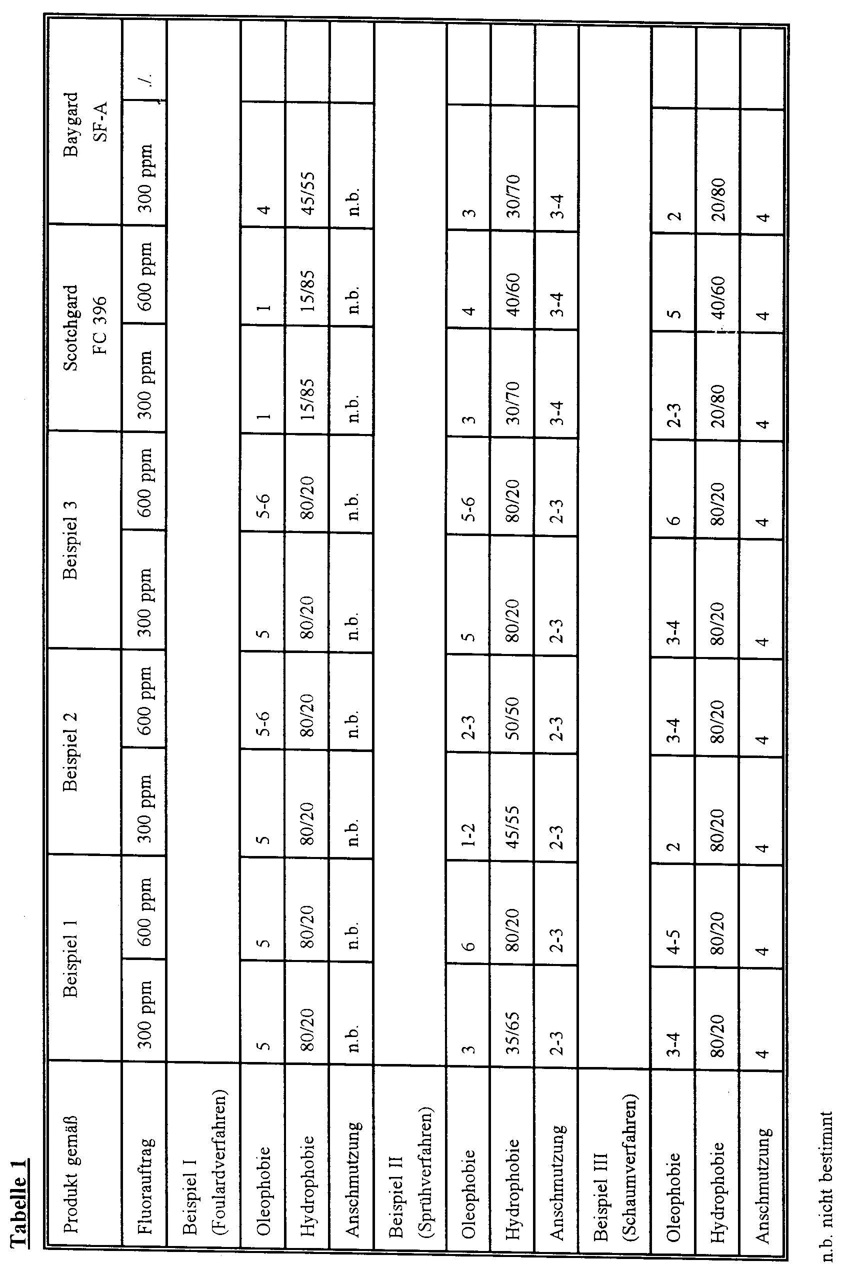

Anhand von Tabelle 1 ist ersichtlich, daß die erfindungsgemäßen Mittel (Beispiele 1 bis 3) den Ausrüstungsmitteln Scotchgard FC 396® und Baygard SF-A® deutlich überlegen sind. Bei vergleichbarem Fluorauftrag sind die Öltestnoten mindestens gleichwertig, in einigen Fällen deutlich besser. Die Wasserabweisung konnte erheblich verbessert werden und erreicht in der Mehrzahl der Fälle die sehr gute Bewertung 80/20. Vorteilhaft ist weiterhin, daß die erfindungsgemäßen Mittel nach dem gängigen Ausrüstungsverfahren (Foulard-, Sprüh-, Schaumverfahren) gute öl-, wasser- und schmutzabweisende Eigenschaften besitzen, während z.B. Scotchgard FC 396 nach dem Foulardverfahren ungeeignete Ergebnisse erreicht.

### Beispiele 4 bis 6

### (Herstellung der erfindungsgemäßen Mittel)

Die erfindungsgemäßen Mittel wurden durch Mischen der Komponenten A1 und B als wäßrige Dispersion erhalten. Die Mischungsverhältnisse sind in der nachfolgenden Tabelle angegeben:

| Beispiel | Komponente A1 | Komponente B (Gew.-Teile) |
|---|---|---|
| 4 | 56 | 44 |
| 5 | 50 | 50 |
| 6 | 40 | 60 |

### Beispiel IV

### Verwendung der erfindungsgemäßen Mittel

In gleicher Weise wie im Beispiel I wurde ein Polyamid-Veloursteppich im Foulardverfahren durch Verwendung der Mittel nach Beispielen 4 bis 6 so ausgerüstet, daß ein Fluorauftrag von 250 ppm auf dem Teppich erzielt wurde. Als Vergleich wurde die für sich allein nicht erfindungsgemäße Komponente A1 ohne Zusatz der Komponente B eingesetzt. Nach der Ausrüstung wurde ein Teil des Teppiches bei 120°C, ein anderer Teil bei Raumtemperatur (25°C) getrocknet und auf seine öl-, wasser- und schmutzabweisenden Eigenschaften geprüft. (siehe nachfolgende Tabelle 2).

**Tabelle 2**

| Produkt | Beispiel 4 | Beispiel 5 | Beispiel 6 | Beispiel A1 | Scotchgard FC 396 | Baygard SF-A |
|---|---|---|---|---|---|---|
| Fluorauftrag Oleophobie | 250 5 | 250 ./. | 250 5 | 250 4 | 250 1 | 250 ppm 4 |

| Beispiel IV (Foulardverfahren; Trocknung bei 120°C) | | | | | | |
|---|---|---|---|---|---|---|
| Oleophobie | 5 | ./. | 5 | 4 | 1 | 4 |
| Hydrophobie | 65/35 | ./. | 50/50 | 60/40 | 15/85 | 45/55 |
| Anschmutzung Oleophobie | 2-3 5 | ./. 5 | 3 5 | 2 4 | n.b 0 | n.b. 0 |

| Beispiel IV (Foulardverfahren; Trocknung bei 25°C) | | | | | | |
|---|---|---|---|---|---|---|
| Oleophobie | 5 | 5 | 5 | 4 | 0 | 0 |
| Hydrophobie | 80/20 | 80/20 | 50/50 | 80/20 | 0/100 | 0/100 |
| Anschmutzung | n.b. | 3 | n.b. | 2 | n.b. | n.b. |
| n.b. nicht bestimmt | | | | | | |

Die Tabelle 2 zeigt, daß die mit den erfindungsgemäßen Mittel ausgerüsteten Teppiche nicht notwendigerweise bei 120°C getrocknet werden müssen, sondern vergleichbare, bei der Wasserabweisung überraschenderweise bessere Ergebnisse erzielt werden, wenn die ausgerüsteten Teppiche bei Raumtemperatur (25°C) getrocknet werden. Daß bei Raumtemperaturen gute Ergebnisse erzielt werden, ist insofern überraschend, da die Hauptübergangstemperatur der Komponente B bei 105°C liegt. Auf eine kostspielige und zum Teil schädliche Wärmebehandlung kann deshalb verzichtet werden. Gleichzeitig ist ersichtlich, daß die erfindungsgemäßen Mittel, die eine Mischung aus fluorhaltigen Acrylatpolymeren und fluorfreien Poly(meth)acrylaten darstellen, bessere Ergebnisse bezüglich Oleophobie und Anschmutzung ergeben als das fluorhaltige Acrylatpolymer (Beispiel A1) allein.

### Beispiel V

### (Verwendung der erfindungsgemäßen Mittel)

Das auszurüstende Basissubstrat war ein Polyestergewebe. Die Auftragung der erfindungsgemäßen Mittel erfolgte nach dem Foulardverfahren. Die Herstellung der Ausrüstungsflotte erfolgte durch Verdünnen des Mittels nach Beispiel 5 mit Wasser in der Art, daß bei einer Flottenaufnahme von 100 % ein Fluorauftrag von 150 bzw. 250 ppm auf dem Polyestergewebe erzielt wurde.

Nach der Ausrüstung wurde bei Raumtemperatur (25°C) getrocknet und auf öl-, wasser- und schmutzabweisende Eigenschaften geprüft.

Als Vergleich wurde das für sich allein nicht erfindungsgemäße Produkt nach Beispiel A1 eingesetzt. (siehe nachfolgende Tabelle 3).

Durch Trocknung der Polyestergewebe bei Raumtemperatur können kostenspielige und z.T. schädliche Wärmebehandlungen vermieden werden. Gegenüber dem reinen Fluorcarbon (Beisp. A1) bietet die Mischung aus Fluorcarbon und Poly(meth)acrylat den Vorteil, daß bei gleichem Fluorauftrag eine geringere Anschmutzung des Gewebes festzustellen ist.

**Tabelle 3**

| Produkt | Beispiel 5 | | Beispiel A1 | |
|---|---|---|---|---|
| Fluorauftrag Oleophobie | 150 ppm 5 | 250 ppm 5 | 150 ppm 4-5 | 250 ppm 5 |

| Beispiel V (Foulardverfahren, Trocknung bei 25°C) | | | | |
|---|---|---|---|---|
| Oleophobie | 5 | 5 | 4-5 | 5 |
| Hydrophobie | 40/60 | 40/60 | 70/30 | 70/30 |
| Anschmutzung | 3 | 3 | 2 | 2 |

## Patentansprüche

1. Substrate aus der Gruppe von nativen und synthetischen Textilien und ihren Gemischen, Leder, mineralischen Stoffen, thermoplastischen und duroplastischen Polymeren und Papier, die mit fluorhaltigen Mitteln, die zwei Komponenten A und B enthalten, von denen die Komponente A ein fluorhaltiges Acrylcopolymerisat darstellt, das, bezogen auf das Gesamtgewicht von A, folgende Gewichtsanteile an Comonomeren enthält:
a) 40 bis 85 Gew.-% Perfluoralkylgruppen enthaltende (Meth)acrylate der Formel
CₙF₂ₙ₊₁-X-O-CO-CR¹=CH₂ (I),
b) 1 bis 45 Gew.-% eines oder mehrerer Monomere aus der Gruppe von Styrol, Acrylnitril, Vinylacetat, Vinylpropionat und Monomeren der Formel
CH₂=CR⁴-CO-OR⁵ (II),
c) 4 bis 30 Gew.-% Monomere der Formel 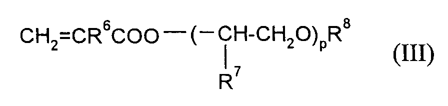 und
d) 1 bis 15 Gew.- % ionische oder ionisierbare Monomere, die entweder eine Amin- oder eine Carboxylfunktion aufweisen, der Formel
CH₂=CR¹¹COO-CH₂CH₂N(R⁹,R¹⁰) (IVa)
oder sich in quaternisierter Form der Formel
[CH₂=CR¹¹-COO-CH₂CH₂N(R⁹R¹⁰R¹²)]^{⊕}Y^{⊖} (IVb)
oder sich in N-oxidierter Form der Formel 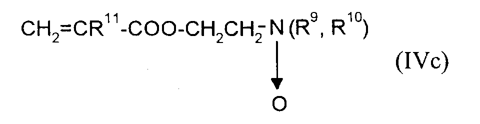 befinden oder solche der Formel
CH₂=CHR¹³-COO^{⊖}Z^{⊕} (V)
sind, wobei in den Formeln
n eine Zahl von 4 bis 20, bevorzugt 6 bis 16 oder ein Gemisch mehrerer dieser Zahlen darstellt,
X für -(-CH₂-)ₘ-, -SO₂-NR²-CH₂-CHR³- oder - O-(-CH₂-)ₘ-steht, wobei m eine Zahl von 1 bis 4, bevorzugt 2, bedeutet,
R¹, R³, R⁴, R⁶, R⁷, R¹¹ und R¹³ unabhängig voneinander für Wasserstoff oder Methyl stehen,
R², R⁹, R¹⁰ und R¹² unabhängig voneinander C₁-C₄-Alkyl bedeuten,
R⁵ für C₁-C₂₂-Alkyl steht,
R⁸ Wasserstoff oder C₁-C₈-Alkyl bedeutet,
p für eine Zahl von 1 bis 50 oder für ein Gemisch mehrerer dieser Zahlen steht,
Y^{⊖} für ein Äquivalent eines ein-bis dreiwertigen Anions steht und
Z^{⊕} das Proton H^{⊕} oder ein Äquivalent eines einwertigen Kations bedeutet;
und die Komponente B ein fluorfreies Poly(meth)acrylat aus einem oder mehreren Comonomeren der Formel 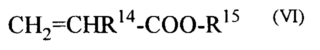 oder Polyacrylnitril mit 0 bis 20 Gew.-% Comonomer (VI) darstellt, in der
R¹⁴ Wasserstoff oder Methyl bedeutet und
R¹⁵ für C₁-C₂₂-Alkyl steht,
wobei 0 bis 20 Gew.-% des Comonomer der Formel (VI) durch ein oder mehrere Comonomere aus der Gruppe von Vinylacetat, Styrol, Acrylnitril, Hydroxyethyl-(meth)acrylat, Hydroxypropyl-(meth)acrylat, Glycidyl(meth)acrylat, (Meth)acrylamid, N-Methylol-(meth)acrylamid und N-Methoxymethylol-(meth)acrylamid ersetzt sein können und wobei das Gewichtsverhältnis von Komponente A zu Komponente B im Bereich von 1:25 bis 10:1, bevorzugt von 1:10 bis 5:1, liegt,
in einer Menge von 10 bis 10.000 ppm, bevorzugt 50 bis 5.000 ppm, besonders bevorzugt 100 bis 2.000 ppm, gerechnet als Fluor und bezogen auf das Gesamtgewicht der Substrate, öl-, wasser- und schmutzabweisend ausgerüstet sind.

2. Substrate gemäß Anspruch 1 aus der Gruppe der nativen und synthetischen Heimtextilien und ihrer Gemische.

3. Fluorhaltige Mittel zur öl-, wasser- und schmutzabweisenden Ausrüstung von Substraten, enthaltend zwei Komponenten A und B, und wäßrige Dispersionen daraus, deren von Wasser verschiedene Inhaltsstoffe 5-50% des Gesamtgewichtes der Dispersionen darstellen und in denen die Komponente A ein fluorhaltiges Acrylcopolymerisat darstellt, das, bezogen auf das Gesamtgewicht von A, folgende Gewichtsanteile an Comonomeren enthält:
a) 40 bis 85 Gew.-% Perfluoralkylgruppen enthaltende (Meth)acrylate der Formel
CₙF₂ₙ₊₁-X-O-CO-CR¹=CH₂ (I),
b) 1 bis 45 Gew.- % eines oder mehrerer Monomere aus der Gruppe von Styrol, Acrylnitril, Vinylacetat, Vinylpropionat und Monomeren der Formel
CH₂=CR⁴-CO-OR⁵ (II),
c) 4 bis 30 Gew.-% Monomere der Formel 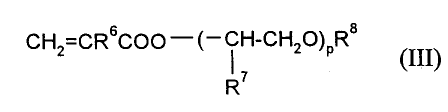 und
d) 1 bis 15 Gew.- % ionische oder ionisierbare Monomere, die entweder eine Amin- oder eine Carboxylfunktion aufweisen, der Formel
CH₂=CR¹¹COO-CH₂CH₂N(R⁹,R¹⁰) (IVa)
oder sich in quaternisierter Form der Formel
[CH₂=CR¹¹-COO-CH₂CH₂N(R⁹R¹⁰R¹²)]^{⊕}Y^{⊖} (IVb)
oder sich in N-oxidierter Form der Formel 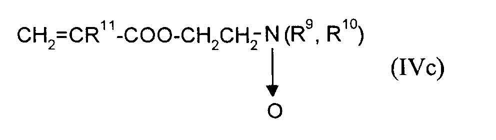 befinden oder solche der Formel
CH₂=CHR¹³-COO^{⊖}Z^{⊕} (V)
sind, wobei in den Formeln
n eine Zahl von 4 bis 20, bevorzugt 6 bis 16, oder ein Gemisch mehrerer dieser Zahlen darstellt,
X für -(CH₂-)ₘ, -SO₂-NR²-CH₂-CHR³- oder - O-(-CH₂-)ₘ-steht, wobei m eine Zahl von 1 bis 4, bevorzugt 2, bedeutet,
R¹, R³, R⁴, R⁶, R⁷, R¹¹ und R¹³ unabhängig voneinander für Wasserstoff oder Methyl stehen,
R², R⁹, R¹⁰ und R¹² unabhängig voneinander C₁-C₄-Alkyl bedeuten,
R⁵ für C₁-C₂₂-Alkyl steht,
R⁸ Wasserstoff oder C₁-C₈-Alkyl bedeutet,
p für eine Zahl von 1 bis 50 oder für ein Gemisch mehrerer dieser Zahlen steht,
Y^{⊖} für ein Äquivalent eines ein-bis dreiwertigen Anions steht und
Z^{⊕} das Proton H^{⊕} oder ein Äquivalent eines einwertigen Kations bedeutet;
und die Komponente B ein fluorfreies Poly(meth)acrylat aus einem oder mehreren Comonomeren der Formel 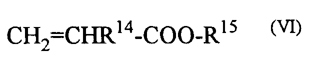 oder Polyacrylnitril mit 0 bis 20 Gew.-% Comonomer (VI) darstellt, in der
R¹⁴ Wasserstoff oder Methyl bedeutet und
R¹⁵ für C₁-C₂₂-Alkyl steht,
wobei 0 bis 20 Gew.-% des Comonomer der Formel (VI) durch ein oder mehrere Comonomere aus der Gruppe von Vinylacetat, Styrol, Acrylnitril, Hydroxyethyl-(meth)acrylat, Hydroxypropyl-(meth)acrylat, Glycidyl(meth)acrylat, (Meth)acrylamid, N-Methylol-(meth)acrylamid und N-Methoxymethylol-(meth)acrylamid ersetzt sein können und wobei das Gewichtsverhältnis von Komponente A zu Komponente B im Bereich von 1:25 bis 10:1, bevorzugt von 1:10 bis 5:1 liegt.

4. Mittel nach Anspruch 3, dadurch gekennzeichnet, daß R⁵ C₁-C₄-Alkyl, Hexyl, Octyl, Stearyl oder Behenyl bedeutet.

5. Mittel nach Anspruch 3, dadurch gekennzeichnet, daß R⁷ Wasserstoff ist.

6. Mittel nach Anspruch 3, dadurch gekennzeichnet, daß der Index p eine Zahl von 3 bis 25 oder ein Gemisch mehrerer dieser Zahlen bedeutet.

7. Mittel nach Anspruch 3, dadurch gekennzeichnet, daß R⁹ und R¹⁰ Methyl bedeuten.

8. Mittel nach Anspruch 3, dadurch gekennzeichnet, daß für den Fall des Einsatzes der Comonomeren (IV a, b, c)
Y^{⊖} für Chlorid, Acetat, 1/2 Sulfat, 1/3 Phosphat oder C₁-C₁₂-Aryl- oder Alkylsulfonat, bevozugt für Chlorid, Acetat oder 1/3 Phosphat steht.

9. Mittel nach Anspruch 3, dadurch gekennzeichnet, daß als Comonomer d) in Komponente A eines oder mehrere der Formel (IVa), (IVb) oder (IVc) vorliegt.

10. Mittel nach Anspruch 3, in denen als Komponente B Poly(meth)acrylate der Formel
CH₂=CHR¹⁴COOR¹⁶ (VII)
eingesetzt werden, in der
R¹⁴ Wasserstoff oder Methyl und
R¹⁶ C₁-C₄-Alkyl bedeuten.
